(19) Europäisches Patentamt
European Patent Office
Office européen des brevets

(11) **EP 1 479 901 B1**

(12) **FASCICULE DE BREVET EUROPEEN**

(45) Date de publication et mention
de la délivrance du brevet:
**28.03.2007 Bulletin 2007/13**

(51) Int Cl.:
***F02D 41/40*** *(2006.01)*

(21) Numéro de dépôt: **04300281.5**

(22) Date de dépôt: **17.05.2004**

(54) **Procédé et système de contrôle du fonctionnement d'un moteur à combustion interne de véhicule automobile**

Verfahren und Vorrichtung zur Regelung eines Verbrennungsmotors

Method and apparatus for controlling an internal combustion engine

(84) Etats contractants désignés:
**AT BE BG CH CY CZ DE DK EE ES FI FR GB GR HU IE IT LI LU MC NL PL PT RO SE SI SK TR**

(30) Priorité: **23.05.2003 FR 0306271**

(43) Date de publication de la demande:
**24.11.2004 Bulletin 2004/48**

(73) Titulaire: **Renault s.a.s.**
**92100 Boulogne Billancourt (FR)**

(72) Inventeurs:
• **Fontvieille, Laurent**
**91190 Gif sur Yvette (FR)**
• **Lamagnere, Fréderic**
**75013 Paris (FR)**

(56) Documents cités:
**EP-A- 0 266 304        DE-A- 10 017 107**
**US-A- 4 357 920        US-A- 4 601 270**
**US-A- 4 817 568**

## Description

La présente invention concerne le contrôle du fonctionnement d'un moteur à combustion interne de véhicule automobile.

De tels contrôles du fonctionnement consistent à gérer le moteur à combustion interne au moyen de différents capteurs et dispositifs actionneurs associés à un ensemble des lois de commande ou stratégies logicielles, mémorisé dans un calculateur embarqué sur le véhicule automobile, appelé « unité de contrôle électronique » (UCE). L'unité de contrôle électronique contient également en mémoire différents paramètres de caractérisation ou calibrations du moteur à combustion. L'unité de contrôle électronique reçoit des informations provenant de l'ensemble des capteurs dont le véhicule est équipé, de façon à permettre au calculateur de connaître en temps réel l'état du moteur. L'unité de contrôle électronique reçoit également des informations concernant la volonté du conducteur pour la conduite du véhicule. Cette volonté se traduit par des signaux correspondant à des actions, par exemple sur la pédale d'accélérateur ou la pédale de frein du véhicule automobile. A partir de ces différentes grandeurs physiques reçues par le calculateur contenu dans l'unité de contrôle électronique, celle-ci est capable de piloter ou réguler l'ensemble des dispositifs actionneurs du moteur pour un fonctionnement optimal.

Parmi les informations essentielles pour le contrôle du fonctionnement d'un moteur, figure en particulier l'information sur le régime de rotation instantané du moteur. En effet, la plupart des valeurs de consigne nécessaires pour le contrôle du fonctionnement d'un moteur à combustion interne sont cartographiées en fonction du signal de régime moteur. Il en est ainsi en particulier des différentes valeurs de couple, de la quantité de carburant, des paramètres d'avance à l'injection ou à l'allumage, des signaux de pression de suralimentation dans le cas d'un moteur surcompressé, des signaux de pression d'alimentation dans un rail commun d'alimentation en carburant, des signaux débit d'air, de richesse, etc. De plus, le signal de régime de rotation instantané du moteur est souvent utilisé dans des algorithmes de calcul, comme par exemple l'algorithme de calcul du débit d'air alimenté dans le moteur. Enfin, on utilise encore le signal du régime de rotation instantané du moteur comme une valeur de mesure dans différentes boucles de régulation, par exemple dans un régulateur du régime de ralenti du moteur.

En résumé, on trouve au moins trois types d'utilisation de l'information sur le régime de rotation instantané du moteur pour le contrôle du fonctionnement du moteur, à savoir :

- dans l'élaboration des valeurs de consigne nécessaires au contrôle de fonctionnement du moteur,
- dans des algorithmes de calcul,
- dans des boucles de régulation.

L'information relative au régime de rotation instantané du moteur est généralement obtenue par une mesure au moyen d'un capteur à effet Hall, qui permet de mesurer le temps entre deux dents d'une cible fixée sur le vilebrequin du moteur à combustion. Le calculateur d'injection fournit une information du régime de rotation instantané du moteur qui est calculée tous les quarts de tour du moteur. Cette information peut faire l'objet d'un calcul de moyenne sur un demi-tour de rotation.

Le signal de régime de rotation instantané du moteur est l'image de l'accélération du moteur et du véhicule automobile. Le couple moteur est appliqué sur la route par l'intermédiaire d'un embrayage ou d'un convertisseur lorsque le véhicule est équipé d'une boîte de vitesses automatique, puis à travers une boîte de vitesses, un dispositif de transmission et les pneumatiques du véhicule, en contact avec la chaussée. Cet ensemble constitue une chaîne cinématique qui présente des inerties, des non-linéarités dues à des jeux, des frottements, etc., ainsi que des résonances- Il en résulte, dans le cas d'une variation de couple demandée au moteur, une réponse sur le signal de régime de rotation instantané du moteur qui n'est pas linéaire et qui fait apparaître un certain nombre d'oscillations à chaque modification du régime du moteur.

On a déjà songé à limiter l'effet de ces oscillations afin qu'elles soient moins ressenties par le conducteur et les passagers du véhicule. A cet effet, on a utilisé des stratégies d'agrément de conduite permettant de moduler le couple moteur. Dans le cas d'un moteur Diesel, on peut ajouter ainsi un terme correctif à la demande de couple effectuée par le conducteur, en fonction du régime du moteur, de la dérivée première et de la dérivée seconde du régime du moteur. Le terme correctif intervient sur le débit du carburant injecté dans le cas d'un moteur Diesel, et sur l'avance à l'allumage dans le cas d'un moteur à essence.

Dans les deux cas, le terme correctif n'est différent de zéro que si l'ensemble de la chaîne cinématique du véhicule se trouve dans un mode oscillatoire. On constate donc que ces stratégies ne suppriment pas les oscillations, mais se contentent d'en limiter les effets. Le document US4817568 décrit une capteur de régime de rotation d'un moteur avec un moyen de filtrage des bruits présents sur le signal représentatif du régime de rotation. La présente invention a pour objet d'éviter la propagation des oscillations du signal de régime de rotation instantané du moteur de façon à supprimer ou réduire très largement les oscillations qui pourraient en résulter sur l'élaboration des signaux de consigne nécessaires à la gestion du fonctionnement du moteur, pour éviter des perturbations dans les algorithmes de calcul ainsi que des perturbations dans les boucles de régulation, donc des écarts sur les suivis des valeurs de consigne.

A cet effet, le procédé de contrôle du fonctionnement d'un moteur à combustion interne de véhicule automobile met en oeuvre des stratégies logicielles et utilise des paramètres caractéristiques du moteur qui sont mémorisés dans une unité de contrôle électronique. L'unité de contrôle électronique reçoit des informations sur l'état du moteur en temps réel et sur la volonté du conducteur du véhicule. Elle émet des signaux de pilotage ou de régulation pour des moyens actionneurs du moteur. Le procédé utilise en particulier une information sur le régime de rotation instantané du moteur. On effectue un filtrage des oscillations du signal de régime de rotation instantané du moteur provoquées par la chaîne cinématique du véhicule à chaque modification du régime moteur avant d'utiliser ledit signal à titre d'information sur le régime de rotation du moteur dans une stratégie logicielle quelconque pour le contrôle du fonctionnement du moteur.

De cette manière, on évite la propagation des oscillations du signal de régime de rotation instantané du moteur à l'ensemble des stratégies logicielles utilisant cette information. Les oscillations sont en effet filtrées immédiatement en aval de l'émission du signal correspondant.

De préférence, le filtrage des oscillations provoquées par la chaîne cinématique est effectué d'une manière telle qu'un retard dans la transmission du signal n'est pas généré, ou pratiquement pas généré.

Différents types de filtrage peuvent être envisagés à cet effet.

On peut avantageusement procéder à un filtrage numérique. On peut utiliser à cet égard un filtre passe haut, par exemple un filtre du 2ème ordre.

Dans un autre mode de mise en oeuvre, on détecte d'éventuelles oscillations du signal de régime de rotation instantané du moteur et on limite la dérivée dudit signal en cas de détection positive.

Un système de contrôle du fonctionnement d'un moteur à combustion interne de véhicule automobile selon l'invention, comprend une unité de contrôle électronique dans laquelle sont mémorisés différentes stratégies logicielles et paramètres caractéristiques du moteur. L'unité de contrôle électronique est capable de recevoir des informations sur l'état du moteur en temps réel et sur la volonté du conducteur du véhicule et d'émettre des signaux de pilotage ou de régulation pour des moyens actionneurs du moteur, une des informations reçues étant une information sur le régime de rotation instantané du moteur. Le système comprend un moyen de filtrage des oscillations du signal de régime de rotation instantané du moteur provoquées par la chaîne cinématique du véhicule à chaque modification du régime moteur disposé en amont de l'entrée dudit signal dans une stratégie logicielle quelconque pour le contrôle du fonctionnement du moteur.

Différents types de moyens de filtrage peuvent être envisagés. A titre d'exemples nullement limitatifs, on mentionnera les filtres numériques, par exemple du type filtre passe haut, notamment du 2ème ordre.

On peut également utiliser un dispositif de détection d'éventuelles oscillations du signal de régime de rotation instantané du moteur et un dispositif de limitation de la dérivée dudit signal en cas de détection positive.

L'invention sera mieux comprise à l'étude de quelques modes de réalisation décrits à titre d'exemples nullement limitatifs et illustrés par les dessins annexés, sur lesquels :

- la figure 1 représente schématiquement un exemple de différents éléments d'un système de contrôle du fonctionnement d'un moteur à combustion interne ;
- la figure 2 illustre une partie des stratégies logicielles mémorisées dans l'unité de contrôle électronique illustrée sur la figure 1 ;
- la figure 3 montre un exemple de filtre pouvant être utilisé pour la mise en oeuvre du procédé de l'invention ; et
- la figure 4 montre un autre exemple de dispositif de filtrage pouvant être utilisé dans le cadre de la présente invention.

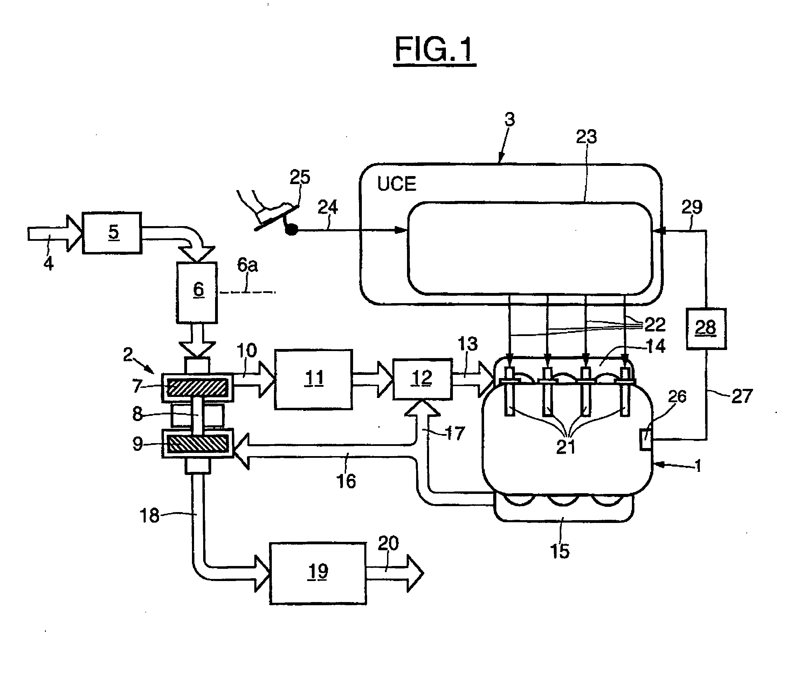

Sur la figure 1, se trouve représenté schématiquement un moteur à combustion interne 1, du type Diesel, alimenté en air comprimé par un groupe turbocompresseur 2 commandé par des signaux émis par une unité de commande électronique UCE, référencée 3 dans son ensemble.

De manière plus précise, de l'air frais alimenté en 4 traverse un filtre à air 5, puis à la sortie du filtre 5, un débitmètre 6 qui fournit sur la connexion 6a un signal de mesure qui peut être utilisé dans l'unité de commande électronique UCE 3. L'air pénètre ensuite dans un compresseur 7 monté sur un arbre commun 8 avec une turbine de récupération 9. L'ensemble est avantageusement à géométrie variable, par exemple par une modification commandée des ailettes de la turbine 9. L'air comprimé issu du compresseur 7 est amené par la conduite 10 à l'entrée d'un échangeur de chaleur 11 qui récupère une partie des calories provenant de la compression. L'air comprimé qui s'est ainsi refroidi, traverse une vanne 12 de recirculation avant d'être amené par la conduite 13 dans le boîtier d'admission 14 du moteur 1. Les gaz d'échappement issus du boîtier d'échappement 15 sont amenés par la conduite 16 sur la turbine 9 qui récupère la majeure partie de leur énergie, de façon à entraîner en rotation le compresseur 7.

Une partie des gaz d'échappement est amenée par la conduite 17 sur la vanne de recirculation 12 de façon à être partiellement mélangée avec l'air d'alimentation alimentant le moteur.

A la sortie de la turbine 9, les gaz d'échappement sont amenés par la conduite 18 sur un pot d'échappement 19 qui peut comporter avantageusement un dispositif catalyseur de dépollution et un filtre à particules. Les gaz issus du pot d'échappement 19 s'échappent ensuite par la conduite 20.

Le carburant est injecté dans les quatre cylindres du moteur 1 par quatre buses d'injection 21 commandées par les connexions 22 qui transmettent les signaux de commande issus de l'unité de commande électronique 3. Celle-ci comporte notamment un calculateur 23 qui reçoit des informations sur l'état du moteur en temps réel. Le calculateur 23 reçoit par exemple le signal 6a issu du débitmètre 6. Il peut recevoir d'autres signaux émanant de capteurs de pression et de température non représentés, mesurant les paramètres du moteur 1 à chaque instant. Le calculateur 23 reçoit également par la connexion 24 un signal correspondant à la position de la pédale d'accélérateur 25 actionnée par le conducteur. Ce signal correspond donc à la volonté du conducteur du véhicule demandant au moteur un certain couple d'entraînement.

L'information sur le régime de rotation instantané du moteur est mesurée par un capteur 26, le signal étant transmis par la connexion 27 à un dispositif de filtrage 28 avant d'être amené par la connexion 29 à l'une des entrées du calculateur 23 de l'unité de contrôle électronique 3.

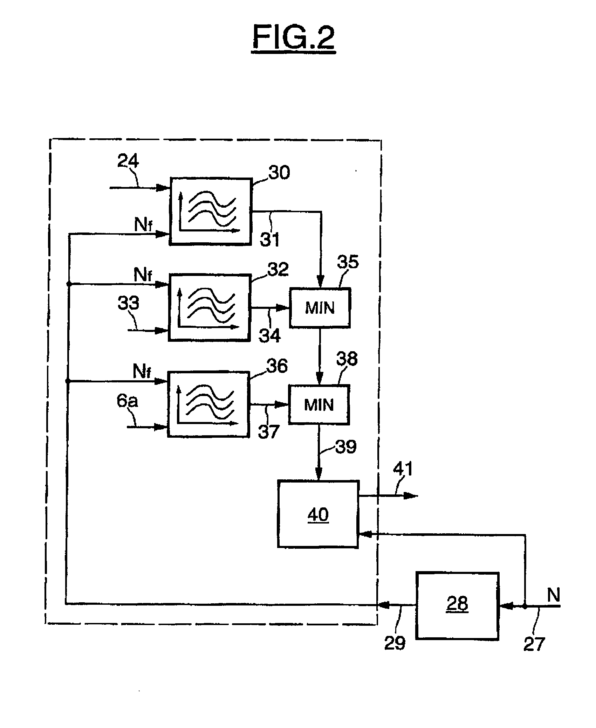

La figure 2 illustre, à titre d'exemple, différents éléments permettant le traitement d'une demande du conducteur dans le cas d'un véhicule équipé d'un moteur Diesel, comme illustré sur la figure 1. On retrouve sur la figure le dispositif de filtrage 28 capable de supprimer les oscillations pouvant apparaître sur le signal N de régime instantané de rotation du moteur, tel que mesuré par le capteur 26. Le signal du régime moteur après filtrage $N_f$ apparaît sur la connexion 29 et est amené aux entrées de plusieurs cartographies mémorisées dans l'unité de contrôle électronique 3. La première cartographie 30 reçoit en entrée par la connexion 24, le signal de position de la pédale d'accélérateur 25 qui correspond à la demande du conducteur. Sur sa deuxième entrée, la cartographie 30 reçoit le signal filtré de régime de rotation instantané du moteur $N_f$. Le signal de sortie de la cartographie 30 apparaissant sur la connexion 31 est une valeur de consigne du débit de carburant qui doit être injecté dans le moteur. On procède cependant à diverses limitations de cette valeur de consigne. A cet effet, une deuxième cartographie 32, également mémorisée dans l'unité de contrôle électronique 3, reçoit sur l'une de ses entrées le signal filtré du régime de rotation du moteur $N_f$ et sur sa deuxième entrée 33 le rapport de transmission de la boîte de vitesses. Le signal de sortie de la cartographie 32 est amené par la connexion 34 à un bloc limiteur 35 qui reçoit sur une deuxième entrée la sortie 31 de la cartographie 30. Le bloc limiteur 35 adopte la valeur minimale reçue sur ses deux entrées. Il en résulte une limitation du couple moteur, permettant d'éviter de détériorer le moteur ou la transmission.

Une deuxième limitation de la valeur de consigne issue de la cartographie 30 est effectuée au moyen d'une troisième cartographie 36, également mémorisée dans l'unité de contrôle électronique 3. La cartographie 36 reçoit sur l'une de ses entrées la valeur filtrée du régime de rotation du moteur $N_f$ et sur sa deuxième entrée le signal provenant de la connexion 6a qui représente le débit d'air frais alimentant le compresseur 7. Le signal de sortie de la cartographie 36, apparaissant sur la connexion 37, est amené à un deuxième bloc limiteur 38 qui détermine à nouveau la valeur minimale de ses deux entrées, la première étant la sortie du premier bloc limiteur 35. La cartographie 36, associée au bloc limiteur 38, réalise donc une limitation de la valeur de consigne du débit de carburant pour éviter l'apparition de fumées à l'échappement.

Le signal de sortie du bloc limiteur 38, apparaissant sur la connexion 39, est amené à un bloc 40 définissant par exemple une stratégie d'agrément de conduite et qui reçoit en outre le signal non filtré du régime de rotation du moteur N. La sortie 41 du bloc 40 constitue le signal de commande du débit de carburant injecté dans le moteur.

L'examen de la figure 1 montre l'existence de plusieurs boucles de régulation susceptibles de transmettre les oscillations du signal à la demande de couple moteur ou au signal du débit de carburant injecté. En l'absence de filtrage, il en résulte ainsi une propagation des oscillations sur la valeur de consigne du couple ou du débit de carburant.

L'introduction du dispositif de filtrage 28, immédiatement après le capteur 26, permet d'empêcher la propagation de ces oscillations sur les différentes stratégies logicielles de l'unité de contrôle électronique.

La sortie du dispositif de filtrage 28 permet de disposer d'une information sur le régime de rotation instantané du moteur dont toutes les oscillations ont été supprimées ou dont les oscillations ont été fortement limitées.

Pour effectuer le filtrage de ce signal, il est important de ne pas introduire de retard dans la transmission du signal. Diverses méthodes de filtrage peuvent être utilisées.

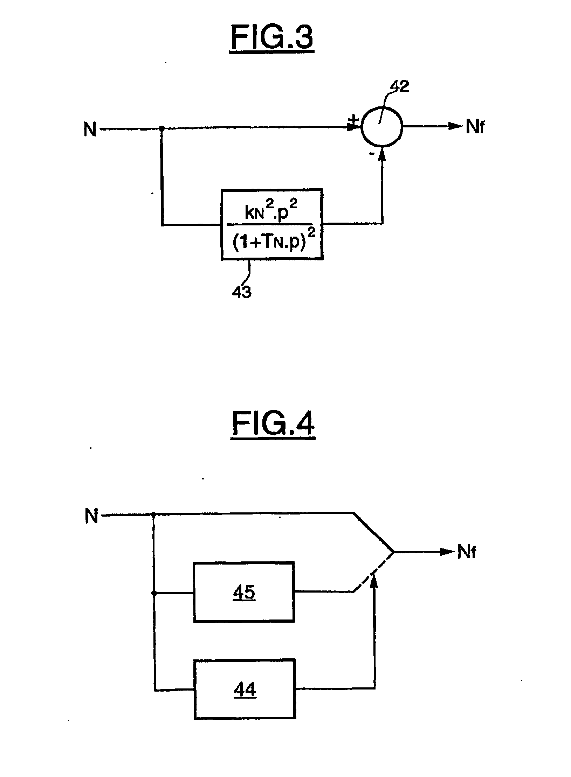

A titre d'exemple, la figure 3 montre un mode de réalisation utilisant un filtrage numérique. Le signal mesuré du régime de rotation du moteur N est amené à l'entrée positive d'un additionneur 42, lequel reçoit sur son entrée négative le signal filtré par un filtre 43 qui, dans l'exemple illustré, est un filtre passe-haut du deuxième ordre dont la fonction de transfert en variable de Laplace, est du type

$$\frac{k^2{}_N \cdot p^2}{(1 + T_N \cdot p)^2}$$

dans laquelle $k_N$ est le gain du filtre,
et $T_N$ est la constante de temps du filtrage.

Le filtre passe-haut 43 du deuxième ordre permet d'isoler les oscillations du signal de régime moteur en rejetant les basses fréquences. Ces oscillations qui apparaissent sur l'entrée négative de l'additionneur 42, sont ainsi soustraites de l'information du régime moteur avec oscillations, afin d'obtenir le signal du régime moteur dénué d'oscillations $N_f$. Un tel dispositif de filtrage est particulièrement simple à mettre en oeuvre.

La figure 4 illustre une variante de réalisation, dans laquelle les oscillations du signal de régime moteur sont éliminées par limitation de la dérivée.

Ce mode de réalisation repose sur la détection des oscillations du signal de régime moteur. Lorsque de telles oscillations sont détectées, on active un dispositif de limitation de la dérivée du signal de régime moteur. Le signal de régime moteur mesuré N est ainsi amené à l'entrée d'un dispositif de détection des oscillations 44, ainsi qu'à l'entrée d'un dispositif de limitation de la pente ou de la dérivée 45. Si le dispositif de détection 44 détecte la présence d'oscillations, le dispositif de limitation de la dérivée 45 est mis en oeuvre de façon à obtenir un effet de filtrage sur le signal de régime moteur $N_f$, En l'absence de détection des oscillations par le dispositif 44, le signal mesuré N est simplement transmis à la sortie du dispositif, sans correction.

La détection des oscillations peut se faire par exemple par détection de la fréquence des oscillations.

L'intérêt d'un tel dispositif de filtrage est de ne présenter aucun retard pour la transmission du signal.

## Revendications

1. Procédé de contrôle du fonctionnement d'un moteur à combustion interne de véhicule automobile, au moyen de stratégies logicielles et de paramètres caractéristiques du moteur mémorisés dans une unité de contrôle électronique (3), laquelle reçoit des informations sur l'état du moteur en temps réel et la volonté (24) du conducteur du véhicule et émet des signaux de pilotage ou de régulation pour des moyens actionneurs du moteur, procédé dans lequel on utilise une information sur le régime de rotation instantané du moteur, **caractérisé par le fait que** l'on effectue un filtrage des oscillations du signal de régime de rotation instantané du moteur provoquées par la chaîne cinématique du véhicule à chaque modification du régime moteur avant d'utiliser ledit signal à titre d'information sur le régime de rotation du moteur dans une stratégie logicielle quelconque pour le contrôle du fonctionnement du moteur.

2. Procédé selon la revendication 1, **caractérisé par le fait qu'**on procède à un filtrage numérique des oscillations du signal de régime de rotation instantané du moteur.

3. Procédé selon la revendication 2, **caractérisé par le fait qu'**on utilise un filtre passe-haut du 2ème ordre.

4. Procédé selon la revendication 1, **caractérisé par le fait qu'**on détecte d'éventuelles oscillations du signal de régime de rotation instantané du moteur et qu'on limite la dérivée dudit signal en cas de détection positive.

5. Système de contrôle du fonctionnement d'un moteur à combustion interne de véhicule automobile, comprenant une unité de contrôle électronique (3) dans laquelle sont mémorisés différentes stratégies logicielles et paramètres caractéristiques du moteur, l'unité de contrôle électronique étant capable de recevoir des informations (6a) sur l'état du moteur en temps réel et la volonté (24) du conducteur du véhicule et d'émettre des signaux (22) de pilotage ou de régulation pour des moyens actionneurs du moteur, une des informations reçues étant une information sur le régime de rotation instantané du moteur, **caractérisé par le fait qu'**il comprend un moyen de filtrage (28) des oscillations du signal de régime de rotation instantané du moteur provoquées par la chaîne cinématique du véhicule à chaque modification du régime moteur disposé en amont de l'entrée dudit signal dans une stratégie logicielle quelconque pour le contrôle du fonctionnement du moteur.

6. Système selon la revendication 5, **caractérisé par le fait que** le moyen de filtrage est un filtre numérique (43) des oscillations du signal de régime de rotation instantané du moteur.

7. Système selon la revendication 6, **caractérisé par le fait que** le filtre numérique est un filtre passe-haut du 2ème ordre.

8. Système selon la revendication 5, **caractérisé par le fait qu'**il comprend un dispositif de détection (44) d'éventuelles oscillations du signal de régime de rotation instantané du moteur et un dispositif de limitation (45) de la dérivée dudit signal en cas de détection positive.

## Claims

1. Method of controlling the operation of an internal combustion engine of a motor vehicle, by means of software strategies and parameters characteristic of the engine stored in an electronic control unit (3), which receives information on the state of the engine in real time and the desire (24) of the driver of the vehicle and emits control or regulation signals for means of actuating the engine, a method in which an item of information on the instantaneous engine rotation speed is used, **characterized in that** the oscillations of the instantaneous engine rotation speed signal generated by the drive train of the vehicle on each change of the engine speed are filtered before the said signal is used as information on the engine rotation speed in any software strategy for controlling the operation of the engine.

2. Method according to Claim 1, **characterized in that** the oscillations of the instantaneous engine rotation speed signal are digitally filtered.

3. Method according to Claim 2, **characterized in that** a second order high pass filter is used.

4. Method according to Claim 1, **characterized in that** any oscillations of the instantaneous engine rotation speed signal are detected and the deviation of the said signal is limited in the event of positive detection.

5. System for controlling the operation of an internal combustion engine of a motor vehicle, comprising an electronic control unit (3) in which different software strategies and parameters characteristic of the engine are stored, the electronic control unit being capable of receiving items of information (6a) on the state of the engine in real time and the desire (24) of the driver of the vehicle and of emitting control or regulation signals (22) for actuating means of the engine, one of the items of information received being an item of information on the instantaneous engine rotation speed, **characterized in that** it comprises a means (28) for filtering the oscillations of the instantaneous engine rotation speed signal caused by the drive train of the vehicle on each change of the engine speed, placed upstream of the input of the said signal in any software strategy for controlling the operation of the engine.

6. System according to Claim 5, **characterized in that** the filtering means is a digital filter (43) of the oscillations of the instantaneous engine rotation speed signal.

7. System according to Claim 6, **characterized in that** the digital filter is a second order high pass filter.

8. System according to Claim 5, **characterized in that** it comprises a device (44) for detecting any oscillations of the instantaneous engine rotation speed signal and a device (45) for limiting the deviation of the said signal in the event of positive detection.

**Patentansprüche**

1. Verfahren zum Steuern des Betriebs eines Kraftfahrzeugverbrennungsmotors mittels Softwarestrategien und charakteristischer Parameter des Motors, die in einer elektronischen Steuereinheit (3) gespeichert sind, die Informationen über den Zustand des Motors in Echtzeit sowie über den Willen (24) des Fahrzeugfahrers empfängt und Steuer- oder Regelsignale für Betätigungsmittel des Motors sendet, Verfahren, bei dem man eine Information über die Momentdrehzahl des Motors verwendet, **dadurch gekennzeichnet, dass** man ein Filtern der Schwingungen des Momentandrehzahlsignals ausführt, die die kinematische Kette des Fahrzeugs bei jedem Motordrehzahlwechsel verursacht, bevor das Signal als Information über die Motordrehzahl bei einer beliebigen Softwarestrategie zum Steuern des Motorbetriebs verwendet wird.

2. Verfahren nach Anspruch 1, **dadurch gekennzeichnet, dass** man ein digitales Filtern der Schwingungen des Momentandrehzahlsignals des Motors vornimmt.

3. Verfahren nach Anspruch 2, **dadurch gekennzeichnet, dass** ein Hochpassfilter 2. Ranges verwendet.

4. Verfahren nach Anspruch 1, **dadurch gekennzeichnet, dass** man eventuelle Schwingungen des Momentandrehzahlsignals des Motors erfasst und die Drift des Signals bei positiver Erfassung einschränkt.

5. System zum Steuern des Betriebs eines Kraftfahrzeugverbrennungsmotors, das eine elektronische Steuereinheit (3) aufweist, in der verschiedene Softwarestrategien und charakteristische Parameter des Motors gespeichert sind, wobei die elektronische Steuereinheit Informationen (6a) über den Zustand des Motors in Echtzeit und über den Willen (24) des Fahrzeugfahrers empfangen und Steuer- oder Regelsignale (22) für Betätigungsmittel des Motors senden kann, wobei eine der empfangenen Informationen eine Information über die Momentandrehzahl des Motors ist, **dadurch gekennzeichnet, dass** es ein Mittel zum Filtern (28) der Schwingungen des Momentandrehzahlsignals des Motors, die von der kinematischen Kette des Fahrzeugs bei jeder Drehzahländerung des Motors verursacht werden, aufweist, die stromaufwärts des Eingangs des Signals in einer beliebigen Softwarestrategie zum Steuern des Motorbetriebs angeordnet sind.

6. System nach Anspruch 5, **dadurch gekennzeichnet, dass** das Filtermittel ein digitales Filter (43) der Schwingungen des Momentandrehzahlsignals des Motors ist.

7. System nach Anspruch 6, **dadurch gekennzeichnet, dass** das digitale Filter ein Hochpassfilter 2. Ranges ist.

8. System nach Anspruch 5, **dadurch gekennzeichnet, dass** es eine Vorrichtung (44) zum Erfassen eventueller Schwingungen des Momentandrehzahlsignals des Motors und eine Vorrichtung zum Einschränken (45) der Drift des Signals bei positiver Erfassung aufweist.

# FIG.1

EP 1 479 901 B1

# FIG.2

## FIG.3

N →●————————→ ±⊕ → Nf
                  42
                  -

$$\frac{k_N{}^2.p^2}{(1+T_N.p)^2}$$

43

## FIG.4

N →●————————————→ Nf

45

44